# FASCICULE DE BREVET EUROPEEN

(11) **EP 1 817 927 B1**
(45) Date de publication et mention de la délivrance du brevet: **09.09.2009**
(21) Numéro de dépôt: 05801328.5
(22) Date de dépôt: 04.11.2005
(51) Int. Cl.: H04W 8/24

(54) **DECLENCHEMENT DE SESSION PRO-ACTIVE DEPUIS UNE APPLET DANS UNE CARTE A PUCE**
EINLEITUNG EINER PROAKTIVEN SITZUNG IN EINER INTELLIGENTEN KARTE VON EINEM APPLET AUS
INITIATION OF A PROACTIVE SESSION IN A SMART CARD FROM AN APPLET

(30) Priorité: 30.11.2004 FR 0412727
(43) Date de publication de la demande: 15.08.2007
(73) Titulaire: Gemalto SA, 92190 Meudon (FR)
(72) Inventeur: CRICCO, Rémy, F-13013 Marseille (FR)
(86) Numéro de dépôt international: PCT/EP2005/055770
(87) Numéro de publication internationale: WO 2006/058817

(56) Documents cités:
- WO-A-02/39369
- WO-A-03/051067
- US-A1- 2003 073 440
- "Digital cellular telecommunications system (Phase 2+); Specification of Subscriber Identity Module - Mobile Equipment (SIM - ME) Interface for SIM Application Toolkit (3GPP TS 51.014 version 4.1.0 Release 4); ETSI TS 151 014" ETSI STANDARDS, EUROPEAN TELECOMMUNICATIONS STANDARDS INSTITUTE, SOPHIA-ANTIPO, FR, vol. 3-T3, no. V410, mars 2003 (2003-03), XP014010872 ISSN: 0000-0001

## Description

La présente invention concerne une application distribuée sous forme d'une première partie dans un terminal et d'une deuxième partie dans une carte à puce, dite également carte à microcontrôleur ou carte à circuit intégré, connectée au terminal.

US2003/073440 décrit une technique pour créer une application pour collecter et distribuer des informations de présence dynamique.

Selon un exemple préféré auquel on se référera dans la suite de la description, le terminal est un terminal radio mobile dans un réseau de radiocommunications cellulaire numérique, et la carte à puce est un module d'identité d'usager amovible du type UICC (Universal Integrated Circuit Card).

WO 03/051067 décrit une technique pour déclencher une application exécutée par une carte à puce depuis une entité externe a travers d'un terminal.

L'invention se rapporte à un terminal ouvert dans lequel est implémenté un système d'exploitation ouvert qui autorise un téléchargement dynamique d'applications additionnelles au-dessus du système d'exploitation, réparties chacune pour partie dans le terminal et pour partie dans une carte à puce.

Une telle carte à puce permet de stocker des applications et comporte une application principale SIM (Subscriber Identity Module) ou USIM pour communiquer avec l'extérieur via une interface de communication dans le terminal et authentifier l'usager de la carte. Seule ladite application principale accède de manière synchronisée à l'interface de communication dans le terminal. Aucune des deuxièmes parties des applications distribuées ne peut accéder de manière synchronisée à l'interface de communication.
Ainsi les premières parties des applications distribuées et l'interface de communication bien qu'indépendants et exécutables sur le système d'exploitation du terminal peuvent accéder de manière séparée à la carte à puce. Par exemple une commande établie par une première partie d'une application distribuée et transmise à la carte à puce peut conduire à une action nécessitant une réponse de la carte à puce incluant une commande pro-active devant recourir à l'interface de communication dans le terminal, comme un établissement d'appel.
Cependant la première partie d'application n'étant pas capable d'interpréter la commande pro-active ne peut pas déclencher une session pro-active. D'autre part, l'interface de communication n'ayant pas interrogé la carte à puce et n'étant donc pas à l'origine de la commande pro-active établie ne peut pas également l'interpréter, ce qui conduit à un blocage.

L'invention a pour objectif de surmonter le défaut de synchronisation entre la première partie d'une application distribuée et l'interface de communication afin que la deuxième partie de l'application puisse délivrer à l'interface de communication une commande pro-active interprétable par celle-ci.

Pour atteindre cet objectif, l'invention a pour objet un procédé, un objet électronique portable, un programme d'ordinateur et un système selon les revendications 1, 5, 6 et 7 respectivement.

La commande ainsi établie et transmise à l'interface de communication est une commande pro-active qui peut déclencher une communication avec l'extérieur du terminal tel qu'un autre terminal ou un serveur.

D'autres caractéristiques et avantages de la présente invention apparaîtront plus clairement à la lecture de la description suivante de plusieurs réalisations préférées de l'invention, données à titre d'exemples non limitatifs, en référence aux **dessins** annexés correspondants dans lesquels :
- la figure 1 est un bloc-diagramme schématique d'un terminal radio mobile et d'une carte à puce incluant des moyens selon une réalisation préférée mettant en oeuvre l'invention ; et
- la figure 2 est un algorithme du procédé pour déclencher une action dans une interface de communication du terminal depuis une deuxième partie d'application, selon l'invention.

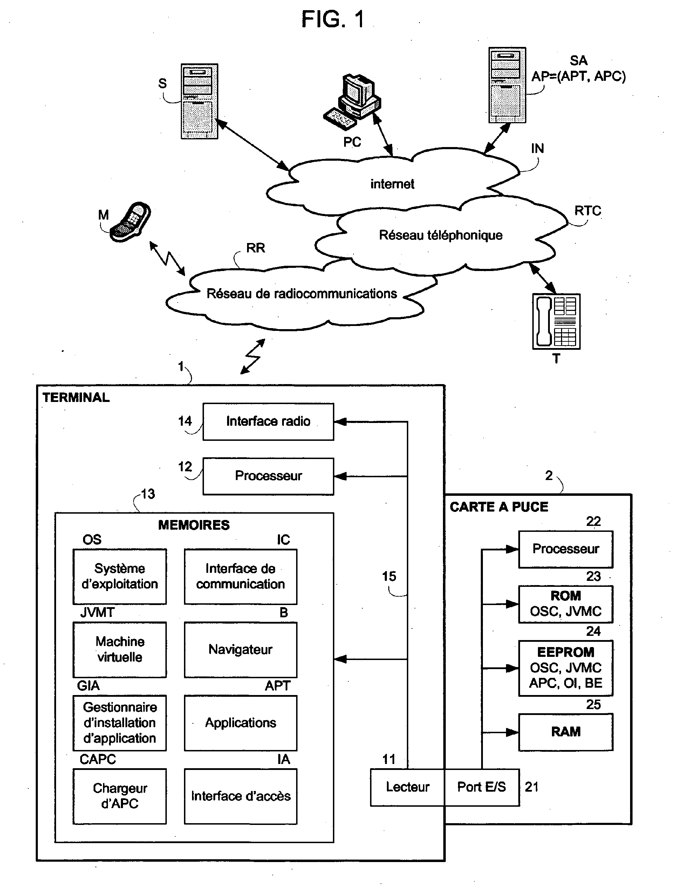

Dans un terminal 1 du type terminal radio mobile et une carte à puce 2 montrés à la figure 1 sont représentés des blocs fonctionnels dont la plupart assurent des fonctions ayant un lien avec l'invention et peuvent correspondre à des modules logiciels et/ou matériels.

Le terminal mobile 1 est inclus dans un réseau de radiocommunications cellulaire numérique RR par exemple du type GSM, GPRS ou UMTS et peut communiquer avec d'autres terminaux M, T et des serveurs S à travers le réseau RR, un réseau téléphonique commuté RTC et l'internet IN par exemple. La carte à puce 2 constitue un module d'identité d'usager du type UICC (Universal Integrated Circuit Card) amovible du terminal mobile 1. La carte à puce est une carte SIM (Subscriber Identity Module) lorsque le réseau RR est du type GSM ou GPRS. La carte à puce contient l'application USIM lorsque le réseau RR fonctionne en accès multiple à répartition par codes CDMA (Coded Division Multiple Access) selon la troisième génération (3GPP) du type UMTS (Universal Mobile Telecommunications System). En variante, le terminal mobile 1 est un petit équipement tel qu'un assistant numérique personnel (PDA) pouvant communiquer avec des réseaux et échanger des commandes et des réponses avec une carte à puce.
Selon d'autres exemples, le terminal est un terminal fixe comme un terminal bancaire accueillant une carte à puce de débit ou de crédit, ou un dispositif portable de transmission de messages, ou un ordinateur personnel (PC) doté d'un lecteur de carte à puce.
Plus généralement, la carte à puce est un objet électronique portable tel qu'une carte de débit ou crédit, un porte-monnaie électronique, une carte à puce additionnelle ou tout autre dispositif électronique petit ou miniature.

En général, le **terminal 1** contient en tant que périphérique un lecteur 11 qui est lié à un port d'entrée/sortie 21 de la carte à puce 2 avec ou sans contact électrique.
Outre le lecteur de carte à puce 11, le terminal 1 du type radiotéléphonique mobile comprend classiquement un processeur 12, des mémoires 13 et une interface radio 14 reliés par un bus 15. Les mémoires 13 regroupent diverses mémoires telles qu'une mémoire morte ROM, une mémoire non volatile EEPROM et une mémoire RAM. Lorsque le terminal est par exemple un ordinateur personnel, les mémoires 13 comprennent un disque dur. L'interface radio 14 transpose en fréquence, convertit numériquement, démodule et décode des messages reçus via le réseau fixe dans le réseau RR, et inversement transmet des messages. Le terminal 1 comprend d'autres périphériques à l'interface d'usager avec le processeur 12 tels qu'un clavier, un afficheur graphique, un haut-parleur et/ou un microphone.
Les mémoires 13 dans le terminal 1 contiennent notamment un système d'exploitation OS par exemple du type BREW, PALM OS, SYMBIAN, WINDOWS MOBILE, ou NUCLEUS, un environnement d'exécution comme par exemple une machine virtuelle Java JVMT et diverses applications et données, et peuvent contenir également un navigateur B. Dans la suite de la description, on se référera à une machine virtuelle Java.

En particulier, dans la mémoire non volatile des mémoires 13 sont implémentées des premières parties APT d'applications AP distribuées également dans la carte à puce 2, un gestionnaire d'installation d'application GIA pouvant être inclus dans la machine virtuelle JVMT, et un chargeur CAPC. Les applications AP sont écrites initialement dans un langage de haut niveau du type orienté objet tel que le langage Java compatible avec la machine virtuelle JVMT. Les premières parties APT d'applications AP sont appelées aussi MIDlet (Mobile Information Device applet). Le gestionnaire GIA programmé en langage Java et exécutable dans le terminal sert à installer diverses applications dans les mémoires 13 et à lancer leurs exécutions, et en particulier à installer et lancer la première partie APT de chaque application AP. Les applications AP sont téléchargées dans le terminal et la carte à puce par exemple depuis un serveur d'application SA géré par exemple par l'éditeur de la carte à puce 2 ou bien tout autre éditeur. En liaison avec le gestionnaire GIA, le chargeur CAPC charge une deuxième partie APC de chaque application AP depuis le terminal dans la carte à puce. Le chargeur CAPC crée un lien entre la machine virtuelle JVMT et le gestionnaire GIA implémentés dans le terminal et une machine virtuelle Java JVMC et un outil informatique OI implémentés dans la carte à puce 2 pour installer les deuxièmes parties APC des application AP à travers un protocole de communication prédéterminé.
En variante, les parties APT et APC d'une application AP ne sont pas téléchargées et ont été installées dans le terminal 1 et la carte à puce 2 lors de la fabrication de ceux-ci.
Typiquement le protocole de communication prédéterminé est un protocole asynchrone à l'alternat ayant des unités de données de protocole (APDU) constituées par des commandes COM transmises depuis le terminal 1 à la carte à puce 2 et des réponses REP transmises depuis la carte à puce 2 au terminal 1. Selon ce protocole, parfois désigné par SIM Application Toolkit selon la norme 3GPP TS 51.014 ou ETSI 102.223, les commandes sont toujours déclenchées à l'initiative du terminal et la carte à puce est pro-active afin d'initier des actions mais encore sous la commande du terminal.
Pour que les premières parties APT des applications AP communiquent respectivement avec les deuxièmes parties APC des applications AP conformément au protocole de communication prédéterminé, une interface d'accès IA pour accéder aux ressources et données dans la carte à puce est implémentée dans les mémoires 13 par exemple sous la forme d'un programme Java API (Application Programming Interface) conforme à la spécification JSR 177 dans le cas d'un terminal J2ME supportant la technologie Java.
Les mémoires 13 comprennent encore une interface de communication IC, encore appelée moteur SIM Toolkit, afin que l'application principale SIM ou USIM ou toute autre application dans la carte à puce 2 communique avec le "monde extérieur" via le terminal 1, par exemple avec un serveur S ou un terminal M, T relié à l'internet IN. L'interface de communication IC gère des commandes et réponses échangées entre le "monde extérieur" et l'application principale SIM ou USIM par exemple pour les adapter à des messages courts échangés avec un serveur de messages courts du réseau RR et empaquetant des données transmises et reçues par le serveur S ou le terminal M à travers l'internet IN.

La **carte à puce 2** comprend classiquement sous forme intégrée un microprocesseur 22, une mémoire non réinscriptible 23 du type ROM, une mémoire non volatile 23 du type EEPROM et une mémoire 25 du type RAM destinée essentiellement à échanger des données avec le terminal 1 à travers le port d'entrée/sortie 21 et le lecteur 11. Les mémoires 23 et 24 contiennent les codes et les données par exemple d'un système d'exploitation OSC et de la machine virtuelle JVMC conforme à la spécification Java Card, ou de tout autre système d'exploitation propriétaire. La mémoire non volatile 24 contient des applications, comme l'application SIM ou USIM, initialement installées lors de la fabrication de la carte et l'outil d'installation OI. La mémoire 24 comporte également un espace mémoire pour mémoriser les deuxièmes parties APC des applications distribuées AP transmises par le serveur SA au terminal 1 et téléchargées par le chargeur CAPC coopérant avec l'outil d'installation OI à travers le lecteur 11, le port 21 et la mémoire RAM 25. Les deuxièmes parties d'application APC constituent des applets STK (SIM ToolKit).

En référence maintenant à la partie supérieure de la f**igure 2** relative à une session par exemple du type SAT (SIM Application Toolkit), on rappelle quelques échanges de commandes COM transmises par le terminal 1 à la carte à puce 2 et de réponses REP transmises par la carte à puce 2 au terminal 1 selon le protocole de communication prédéterminé qui impose que chaque couple de commande et réponse soit déclenché à l'initiative du terminal car la carte bien que pro-active est esclave du terminal.
A des étapes E0, au début de la session entre des première partie APT et deuxième partie APC d'une application AP, la première partie d'application requiert une ouverture de session à l'interface d'accès IA qui établit une commande ENVELOPE ENV pour transférer la désignation de l'action dans la deuxième partie d'application APC, en l'occurrence une action pour obtenir (SELECT ITEM) une page. La partie d'application APC dans la carte 2 retourne par exemple une liste de services désignés chacun par un nom et/ou un icone, compressée dans le champ de données d'une réponse REP à l'interface d'accès IA pour que la partie d'application APT fournisse une page de noms et/ou d'icones correspondant aux services et commande l'affichage de cette page sur l'écran du terminal 1. Puis l'usager du terminal sélectionne le nom ou l'icone d'un service et navigue dans un sous-menu correspondant afin que par l'intermédiaire de couples de commande ENV et réponse REP la première partie d'application APT transmette des sélections dans des pages et la deuxième partie d'application APC transmette des pages à afficher.

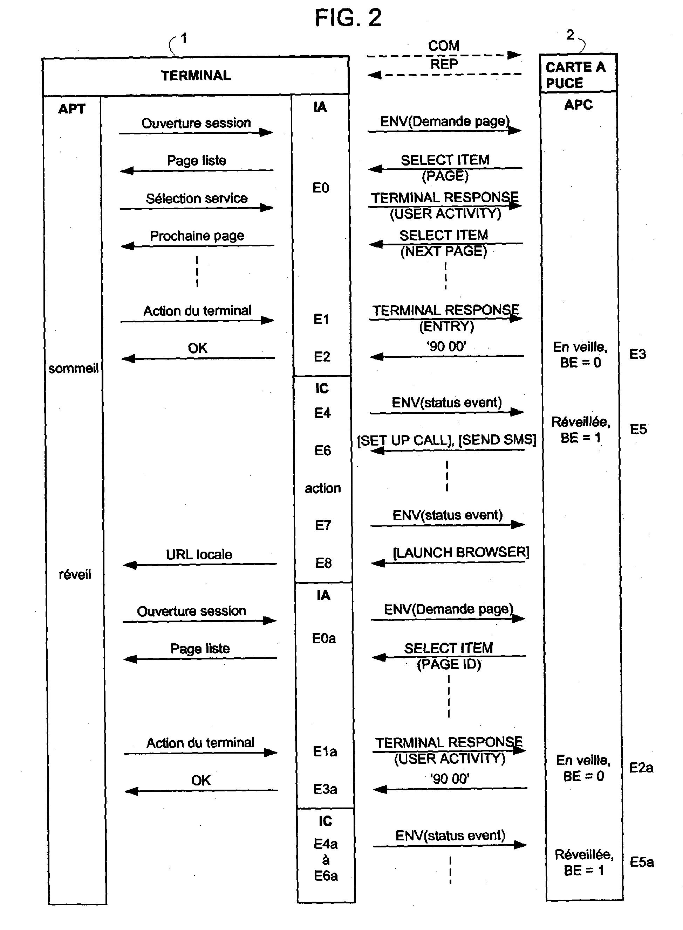

A ce stade, comme déjà signalé à propos de la technique antérieure dans le préambule de la description et comme montré à une étape E1 dans la figure 2, une sélection de l'usager peut conduire à une action (TERMINAL RESPONSE) nécessitant une réponse incluant une commande pro-active. L'action peut particulièrement être relative à une communication avec une entité M, T, S extérieure au terminal 1, qui recourt à l'interface de communication IC. L'action correspond à une commande pro-active relative par exemple à une demande d'établissement d'appel (SET-UP CALL) ou une demande d'envoi de message court (SEND SHORT MESSAGE) établie par la deuxième partie d'application APC et destinée à l'interface de communication IC dans le terminal 1. La commande pro-active ne peut pas être interprétée par la première partie d'application APT qui ne peut gérer aucune session pro-active. En outre, l'interface de communication IC restera inactive puisqu'elle n'a pas interrogé (FETCH) la carte à puce pour cette commande pro-active.

Selon l'invention, le défaut de synchronisation entre la première partie d'application APT (MIDlet) et l'interface de communication IC est surmonté grâce à des étapes E2 à E6 succédant à l'étape E1 et montrées à la figure 2.
Après l'étape E1, la deuxième partie d'application APC ne répond pas par une commande pro-active, mais la partie d'application APC s'enregistre dynamiquement dans une table d'événements incluse dans la carte afin d'être réveillée lors de l'apparition de l'événement status. La partie d'application APC bascule alors à un état de veille après l'avoir signalé par une réponse REP 'Ox 90 00' sans données à la première partie d'application APT qui termine ainsi momentanément la communication avec la deuxième partie d'application APC et se met en sommeil, à l'étape E2. L'état de veille à l'étape E3 engendre dans la carte à puce 2 un transfert de paramètres de l'action désignée par la première partie d'application APT à l'étape E1 pour les écrire dans un espace d'événement de la mémoire 24, et la mise d'un bit d'état BE à un premier état logique "0" dans la carte 2.
Pendant les étapes E0 à E2, l'interface de communication IC continue d'interroger périodiquement la carte à puce 2. Ainsi à la suite de la réponse REP 'Ox 90 00', une prochaine commande d'événement ENV(status event) est transmise à l'étape E4 par l'interface de communication IC à la deuxième partie d'application APC et interroge la carte à puce sur l'intention de celle-ci d'envoyer une commande pro-active. Dans la carte à puce, la deuxième partie d'application APC à l'état de veille BE = "0" est à l'écoute de toute demande d'événement et est réveillée par une commande d'événement 'status event', à l'étape E5. La partie d'application APC lit les paramètres de l'action désignée par la partie d'application APT à l'étape E1, dans l'espace d'événement de la mémoire 24 de la carte à puce. Le bit d'état BE est mis à un deuxième état logique "1" pour que la partie d'application APT ainsi réveillée établisse une réponse REP avec la commande pro-active correspondant aux paramètres lus de l'action désignée, comme par exemple une demande d'établissement d'appel (SET UP CALL) ou une demande d'envoi de message court (SEND SMS). La partie d'application APC efface dynamiquement son enregistrement relatif à l'événement status dans la table d'événements, sauf si elle doit exécuter d'autres commandes, comme illustré par les étapes ci-après E0a. A l'étape E6, la commande pro-active dans la réponse REP est établie selon les paramètres de l'action lus dans la mémoire 24 et transmise par la partie d'application réveillée APT à l'interface de communication IC du terminal 1. L'interface IC traite alors d'une manière classique la commande pro-active, en requérant l'établissement d'un appel auprès du réseau fixe du réseau RR ou transmettant un message court au serveur de messages courts, selon les deux exemples précités.

En variante de l'étape E1, la deuxième partie d'application APC est activée par un événement externe ou interne au terminal mais indépendant de la première partie d'application APT afin que la deuxième partie APC réponde suivant l'étape E8, par exemple en lançant le navigateur.

Si la première partie d'application APT doit continuer une exécution d'établissement de commande après la réponse REP 'Ox 90 00' sans données de la deuxième partie d'application APC, la partie d'application APT se met en sommeil, simulant une occupation à l'étape E2, jusqu''a ce qu'elle reçoive une commande pro-active particulière de type "push" qui va la pousser à se réveiller, après les étapes E4 à E6.
Comme montré en **bas de la** **figure 2**, la commande pro-active particulière est par exemple une commande de lancement de navigateur LAUNCH BROWSER qui est établie et transmise par la deuxième partie d'application APC à une étape E8 succédant à une étape E7 et qui contient des données et une adresse locale URL (Uniform Resource Locator) pour interpréter les données afin de lancer le navigateur B dans le terminal 2. Au cours de l'étape E7, l'interface de communication IC a transmis une commande d'événement précédente 'status event' à la deuxième partie d'application APC, après les étapes E4 à E6 et l'exécution de l'action désignée dans l'interface de communication IC, précédant les étapes E7 et E8.
La commande pro-active particulière LAUNCH BROWSER crée une dynamique entre les parties d'application APT et APC suivant le sens de la deuxième partie d'application APC vers la première partie d'application APT. L'interaction entre les parties d'application APT et APC est poursuivie à la suite de l'étape E8 par des échanges classiques de commandes et réponses E0a analogues aux étapes E0 et pouvant être poursuivies par des étapes E1a à E6a selon l'invention, comme montré en bas de la figure 2.

## Revendications

1. - Procédé pour déclencher une action au sein d'une interface de communication (IC) d'un terminal (1) incluant une première partie (APT) d'une application (AP), depuis une deuxième partie (APC) de l'application installée au sein d'un objet électronique portable (2) connecté au terminal,
**caractérisé en ce que** le procédé comprend les étapes suivantes de :
- transmission (E1) d'une commande désignant l'action depuis la première partie d'application à la deuxième partie d'application,
- mise en sommeil (E2) de la première partie, d'application (APT),
- mise en veille (E3) de la deuxième partie d'application (APC) et mémorisation de paramètres de l'action désignée au sein de l'objet électronique portable,
- transmission (E4) d'une commande d'événement par l'interface de communication (IC) à la deuxième partie d'application (APC),
- réveil (E5) de la deuxième partie d'application (APC) et lecture des paramètres d'action mémorisés,
- établissement (E6) d'une commande selon les paramètres d'action lus dans la deuxième partie d'application réveillée (APC), et
- transmission de la commande établie depuis la deuxième partie d'application à destination de l'interface de communication (IC).

2. - Procédé selon la revendication 1, dans lequel l'action désignée est relative à une communication avec une entité (M, T, S) extérieure au terminal (1).

3. - Procédé selon la revendication 1 ou 2, dans lequel le procédé comprend les étapes suivantes de :
- exécution de l'action désignée par l'interface de communication (IC),
- transmission (E7) d'une commande d'événement depuis l'interface de communication (IC) vers la deuxième partie d'application (APC), et
- transmission (E8) d'une commande particulière depuis la deuxième partie d'application vers la première partie d'application (APT) pour réveiller la première partie d'application.

4. - Procédé selon la revendication 3, dans lequel la commande particulière lance un navigateur (B) au sein du terminal (1).

5. - Objet électronique portable (2), tel qu'une carte à puce, objet electronique portable apte à être connecté à un terminal (1) pour déclencher une action au sein d'une interface de communication (IC) du terminal, le terminal incluant une première partie (APT) d'une application (AP), l'objet électronique portable incluant une deuxième partie (APC) de l'application,
**caractérisée en ce que** l'objet électronique portable comprend :
- un moyen pour recevoir une commande désignant l'action transmise (E1) depuis la première partie d'application à destination de la deuxième partie d'application,
- un moyen (E2) pour mettre en sommeil la première partie d'application (APT),
- un moyen (E3) pour mettre en veille la deuxième partie d'application (APC) et mémoriser des paramètres de l'action désignée au sein de l'objet électronique portable,
- un moyen pour recevoir une commande d'événement transmise (E4) par l'interface de communication (IC) et lire les paramètres d'action mémorisés,
- un moyen (E5) pour réveiller la deuxième partie d'application (APC),
- un moyen (E6) pour établir une commande selon les paramètres d'action lus dans la deuxième partie d'application réveillée (APC),
- un moyen pour transmettre la commande établie depuis la deuxième partie d'application à destination de l'interface de communication (IC).

6. - Programme d'ordinateur apte à être mis en oeuvre dans un objet électronique portable (2) connecté à un terminal (1), pour déclencher une action au sein d'une interface de communication (IC) du terminal incluant une première partie (APT) d'une application (AP), depuis une deuxième partie (APC) de l'application installée au sein de l'objet électronique portable (2),
**caractérisé en ce que** le programme comprend des instruction de programme qui, lorsque le programme est chargé et exécuté sur ledit objet électronique portable, réalisent les étapes suivantes :
- transmission d'une commande désignant l'action depuis la première partie d'application vers la deuxième partie d'application:
- mise en sommeil (E2) de la première partie d'application (APT),
- mise en veille (E3) de la deuxième partie d'application (APC) et mémorisation de paramètres de l'action désignée au sein de l'objet électronique portable,
- réveil (E5) de la deuxième partie d'application (APC) suite à une commande d'événement transmise (E4) par l'interface de communication (IC) et lecture des paramètres d'action mémorisés,
- établissement (E6) d'une commande selon les paramètres d'action lus dans la deuxième partie d'application réveillée (APC), et
- transmission de la commande établie depuis la deuxième partie d'application à destination de l'interface de communication (IC).

7. - Système comprenant un terminal (1) connecté à un objet électronique portable (2) pour déclencher une action au sein d'une interface de communication (IC) du terminal, le terminal incluant une première partie (APT) d'une application (AP), l'objet électronique portable incluant une deuxième partie (APC) de l'application,
**caractérisé en ce que** l'objet électronique portable comprend :
- un moyen pour recevoir une commande désignant l'action transmise (E1) depuis la première partie d'application à destination de la deuxième partie d'application,
- un moyen (E2) pour mettre en sommeil la première partie d'application (APT),
- un moyen (E3) pour mettre en veille la deuxième partie d'application (APC) et mémoriser des paramètres de l'action désignée au sein de l'objet électronique portable,
- un moyen pour recevoir une commande d'événement transmise (E4) par l'interface de communication (IC) et lire les paramètres d'action mémorisés,
- un moyen (E5) pour réveiller la deuxième partie d'application (APC),
- un moyen (E6) pour établir une commande selon les paramètres d'action lus dans la deuxième partie d'application réveillée (APC),
- un moyen pour transmettre la commande établie depuis la deuxième partie d'application à destination de l'interface de communication (IC).

## Claims

1. - A method for starting an action within a communication interface (IC) of a terminal (1) including a first part (APT) of an application (AP), from a second part (APC) of the application (AP) installed within a portable electronic object (2) connected to the terminal,
**characterised in that** the method includes the following steps of:
- transmitting (E1) a command designating the action from the first part of an application to the second part of an application,
- calculating (E2) the first part of an application (APT),
- deactivating the first part (2) of application (APT)
- putting in standby mode (E3) the second part of an application (APC) and storing parameters of the action designated within the portable electronic device,
- transmitting (E4) an event command through the communication interface (IC) to the second part of an application (APC),
- reactivating (E5) the second part of an application (APC) and reading the stored action parameters,
- establishing (E6) a command according to the action parameters read in the second part of the reactivated application (APC), and
- transmitting the command established from the second part of an application to the communication interface (IC) .

2. - A method according to claim 1, wherein the designated action relates to a communication with an entity (M, T, S) outside the terminal (1).

3. - A method according to claim 1 or 2, wherein the method includes the following steps of:
- executing the action designated by the communication interface (IC),
- transmitting (E7) an event command from the communication interface (IC) to the second part of an application (APC), and
- transmitting (E8) a particular command from the second part of an application to the first part of an application (APT) to reactivate the first part of an application.

4. - A method according to claim 3, wherein the particular command starts a browser (B) within the terminal (1).

5. - A portable electronic object (2), such as a chip card, a portable electronic device able to be connected to a terminal (1) for starting an action within a communication interface (IC) of the terminal, the terminal including a first part (APT) of an application (AP), a portable electronic device including a second part (APC) of the application,
**characterised in that** the portable electronic device includes:
- means for receiving a command designating the action transmitted (E1) from the first part of an application to the second part of an application,
- means (E2) for deactivating the first part of an application (APT),
- means (E3) for putting in standby mode the second part of the application (APC) and storing parameters of the action designated within the portable electronic device,
- means for receiving an event command transmitted (E4) through the communication interface (IC) and reading the stored action parameters,
- means (E5) for reactivating the second part of an application (APC),
- means (E6) for establishing a command according to the action parameters read in the reactivated second part of an application (APC),
- means for transmitting the command established from the second part of an application to the communication interface (IC).

6. - A computer program able to be implemented in a portable electronic device (2) connected to a terminal (1) for starting an action within a communication interface (IC) of the terminal including a first part (APT) of an application (AP), from a second part (APC) of the application installed within the portable electronic device (2),
**characterised in that** the program includes program instructions which, when the program is loaded and executed on said portable electronic device, perform the following steps:
- transmitting a command designating the action from the first part of an application to the second part of an application:
- deactivating (E2) the first part of an application (APT),
- putting the second part of the application (APC) in standby mode (E3) and storing parameters of the action designated within the portable electronic device,
- reactivating (E5) the second part of an application (APC) further to an event command transmitted (E4) through the communication interface (IC) and reading the stored action parameters,
- establishing (E6) a command according to the action parameters read in the reactivated second part of an application (APC), and
- transmitting the established command from the second part of an application to the communication interface (IC).

7. - A system including a terminal (1) connected to a portable electronic device (2) for starting an action within a communication interface (IC) of the terminal, the terminal including a first part (APT) of an application (AP), the portable electronic device including a second part (APC) of the application,
**characterised in that** the portable electronic device includes:
- means for receiving a command designating the action transmitted (E1) from the first part of an application to the second part of an application,
- means (E2) for deactivating the first part of an application (APT),
- means (E3) for putting in standby mode the second part of an application (APC), and storing parameters of the designated action within the portable electronic device,
- means for receiving an event command transmitted (E4) through the communication interface (IC) and means for reading the stored action parameters,
- means (E5) for reactivating the second part of an application (APC),
- means (E6) for establishing a command according to the action parameters read in the reactivated second part of an application (APC),
- means for transmitting the established command from the second part of an application to the communication interface (IC).

## Patentansprüche

1. . Verfahren zum Auslösen einer Aktion innerhalb einer Kommunikationsschnittstelle (IC) eines Terminals (1), das einen ersten Teil (APT) einer Anwendung (AP) umfasst, ausgehend von einem zweiten Teil (APC) der innerhalb eines an das Terminal angeschlossenen tragbaren elektronischen Objekts (2) installierten Anwendung,
**dadurch gekennzeichnet, dass** das Verfahren die folgenden Stufen umfasst:
- Übertragung (E1) eines Befehls, der die Aktion ausgehend von dem ersten Anwendungsteil auf den zweiten Anwendungsteil bezeichnet,
- Schaltung in den Ruhebetrieb (E2) des ersten Anwendungsteils (APT),
- Schaltung in den Standby-Betrieb (E3) des zweiten Anwendungsteils (APC) und Speicherung von Parametern der innerhalb des tragbaren elektronischen Objekts bezeichneten Aktion,
- Übertragung (E4) eines Ereignisbefehls durch die Kommunikationsschnittstelle (IC) auf den zweiten Anwendungsteil (APC),
- Aufwecken (E5) des zweiten Anwendungsteils (APC) und Lesen der gespeicherten Aktionsparameter,
- Ausstellung (E6) eines Befehls gemäß den Aktionsparametern, die in dem zweiten geweckten Anwendungsteil (APC) gelesen werden, und
- Übertragung des Befehls, der ausgehend vom zweiten Anwendungsteil erstellt wird und für die Kommunikationsschnittstelle (IC) bestimmt ist.

2. - Verfahren gemäß Anspruch 1, in dem die bezeichnete Aktion relativ zu einer Kommunikation mit einer zum Terminal (1) externen Einheit (M, T. S) ist.

3. - Verfahren gemäß Anspruch 1 oder 2, in dem das Verfahren die folgenden Stufen umfasst:
- Ausführung der von der Kommunikationsschnittstelle (IC) bezeichneten Aktion,
- Übertragung (E7) eines Ereignisbefehls ausgehend von der Kommunikationsschnittstelle (IC) zum zweiten Anwendungsteil (APC), und
- Übertragung (E8) eines besonderen Befehls ausgehend von dem zweiten Anwendungsteil zum ersten Anwendungsteil (APT), um den ersten Anwendungsteil zu wecken.

4. - Verfahren gemäß Anspruch 3, in dem der besondere Befehl einen Browser (B) innerhalb des Terminals (1) startet.

5. - Tragbares elektronisches Objekt (2), wie z. B. eine Chipkarte, wobei das tragbare elektronische Objekt geeignet ist, an ein Terminal (1) angeschlossen zu werden, um eine Aktion innerhalb einer Kommunikationsschnittstelle (IC) des Terminals auszulösen, wobei das Terminal einen ersten Teil (APT) einer Anwendung (AP) beinhaltet, wobei das tragbare elektronische Objekt einen zweiten Teil (APC) der Anwendung beinhaltet,
**dadurch gekennzeichnet, dass** das tragbare elektronische Objekt Folgendes umfasst:
- ein Mittel um einen Befehl zu empfangen, der die ausgehend von dem ersten Anwendungsteil in Richtung des zweiten Anwendungsteils übertragene Aktion (E1) bezeichnet,
- ein Mittel (E2), um den ersten Anwendungsteil (APT) in den Ruhebetrieb zu schalten,
- ein Mittel (E3), um den zweiten Anwendungsteil (APC) in den Standby-Betrieb zu schalten und die Parameter der innerhalb des tragbaren elektronischen Objekts bezeichneten Aktion zu speichern,
- ein Mittel, um einen Ereignisbefehl (E4) zu empfangen, der von der Kommunikationsschnittstelle (IC) übertragen wird, und die gespeicherten Aktionsparameter zu lesen,
- ein Mittel (E5), um den zweiten Anwendungsteil (APC) zu wecken,
- ein Mittel (E6), um einen Befehl gemäß den Aktionsparametern herzustellen, die im zweiten, geweckten Anwendungsteil (APC) gelesen werden,
- ein Mittel, um den Befehl zu übertragen, der ab dem zweiten Anwendungsteil hergestellt wird, der für die Kommunikationsschnittstelle (IC) bestimmt ist.

6. - Computerprogramm, das geeignet ist, in einem tragbaren elektronischen Objekt (2) umgesetzt zu werden, das an ein Terminal (1) angeschlossen ist, um eine Aktion innerhalb einer Kommunikationsschnittstelle (IC) des Terminals auszulösen, das einen ersten Teil (APT) einer Anwendung (AP) umfasst, und zwar ausgehend von einem zweiten Teil (APC) der innerhalb des tragbaren elektronischen Objekts (2) installierten Anwendung,
**dadurch gekennzeichnet, dass** das Programm Programmanweisungen umfasst, die, wenn das Programm geladen ist und auf dem genannten tragbaren elektronischen Objekt ausgeführt wird, die folgenden Stufen realisieren:
- Übertragung eines Befehls, der die Aktion ausgehend vom ersten Anwendungsteil zum zweiten Anwendungsteil bezeichnet:
- Schaltung in den Ruhebetrieb (E2) des ersten Anwendungsteils (APT),
- Schaltung in den Standby-Betrieb (E3) des zweiten Anwendungsteils (APC) und Speicherung von Parametern der innerhalb des tragbaren elektronischen Objekts bezeichneten Aktion,
- Wecken (E5) des zweiten Anwendungsteils (APC) im Anschluss an einen Ereignisbefehl, der durch die Kommunikationsschnittstelle (IC) übertragen (E4) wird und Lesen der gespeicherten Aktionsparameter,
- Erstellen (E6) eines Befehls gemäß den Aktionsparametern, die in dem zweiten, geweckten Anwendungsteil (APC) gelesen werden, und
- Übertragung des Befehls, der ausgehend von dem zweiten Anwendungsteil erstellt wird, der für die Kommunikationsschnittstelle (IC) bestimmt ist.

7. - System, das ein Terminal (1) umfasst, welches an ein tragbares elektronisches Objekt (2) angeschlossen ist, um eine Aktion innerhalb einer Kommunikationsschnittstelle (IC) des Terminals auszulösen, wobei das Terminal einen ersten Teil (APT) einer Anwendung (AP) beinhaltet, wobei das tragbare elektronische Objekt einen zweiten Teil (APC) der Anwendung beinhaltet,
**dadurch gekennzeichnet, dass** das tragbare elektronische Objekt Folgendes umfasst:
- ein Mittel zum Empfang eines Befehls, der die Aktion bezeichnet, die ausgehend von dem ersten Anwendungsteil übertragen (E1) wird und für den zweiten Anwendungsteil bestimmt ist,
- ein Mittel (E2) zum Schalten des ersten Anwendungsteils (APT) in den Ruhebetrieb,
- ein Mittel (E3) zum Schalten des zweiten Anwendungsteils (APC) in den Standby-Betrieb und Speicherung der Parameter der innerhalb des tragbaren elektronischen Objekts bezeichneten Aktion,
- ein Mittel zum Empfang eines Ereignisbefehls, der von der Kommunikationsschnittstelle (IC) übertragen (E4) wird, und zum Lesen der gespeicherten Aktionsparameter,
- ein Mittel (E5) zum Wecken des zweiten Anwendungsteils (APC),
- ein Mittel (E6) zum Herstellen eines Befehls gemäß den Aktionsparametern, die im zweiten geweckten Anwendungsteil (APC) gelesen werden,
- ein Mittel zum Übertragen des Befehls, der ausgehend von dem zweiten Anwendungsteil hergestellt wird und für die Kommunikationsschnittstelle (IC) bestimmt ist.
